Europäisches Patentamt

European Patent Office

Office européen des brevets

(11) Numéro de publication: **0 332 518**
**A2**

(12) # DEMANDE DE BREVET EUROPEEN

(21) Numéro de dépôt: **89400607.1**

(22) Date de dépôt: **03.03.89**

(51) Int. Cl.⁴: **G 09 F 7/04**
**B 29 C 45/14, B 29 C 67/18**

(30) Priorité: **08.03.88 FR 8802942**

(43) Date de publication de la demande:
**13.09.89 Bulletin 89/37**

(84) Etats contractants désignés:
**BE DE ES FR GB GR IT LU NL**

(71) Demandeur: **PSP EUROPE**
**66, Avenue du Général de Gaulle**
**F-64110 Mazeres-Lezons (FR)**

(72) Inventeur: **Teillard, Christophe**
**Rue de la Garenne**
**F-64110 Mazerez-Lezons (FR)**

(74) Mandataire: **Rodhain, Claude et al**
**Cabinet Claude Rodhain 30, rue la Boétie**
**F-75008 Paris (FR)**

(54) **Procédé pour la réalisation de tableaux magnétiques et tableaux ainsi obtenus.**

(57) L'invention concerne un procédé pour la réalisation de tableaux magnétiques.

Le but de l'invention est de réaliser un tableau de faible coût de revient, et qui est obtenu par injection en une seule opération de moulage.

Cet objectif est atteint à l'aide d'un procédé pour la réalisation de tableaux magnétiques, caractérisé en ce que l'on surmoule, par injection, sur la périphérie d'un panneau métallique (9) fixé temporairement dans le moule, une bordure formant cadre (15), l'empreinte de moulage communiquant en outre avec des cavités (13) situées sensiblement dans le même plan horizontal que ladite empreinte pour obtenir à la fois, en une seule opération, le cadre (15) et des pattes de fixation (14) pour l'accrochage du tableau.

Cette invention est plus spécialement adaptée pour les tableaux d'affichage ou de publicité.

FIG. 2

EP 0 332 518 A2

## Description

### Procédé pour la réalisation de tableaux magnétiques et tableaux ainsi obtenus

L'invention concerne un procédé pour la réalisation de tableaux magnétiques notamment d'affichage, de planning ou de publicités sur lesquels on peut soit fixer des documents à l'aide de pastilles aimantées soit écrire à l'aide de feutres spéciaux à effaçage à sec.

Les petits tableaux d'affichage connaissent un certain développement car ils sont utilisés comme présentoir pour l'exposition de photographies familiales ou pour noter des messages et ils sont alors disposés auprès du téléphone ou dans les cuisines.

Ces tableaux peuvent être réalisés soit en liège ou en bois, pour recevoir à l'aide d'épingles ou de punaises les messages que l'on entend conserver ou exploiter, soit en ardoise ou en matière plastique pour servir d'écritoires à l'aide de craies ou de stylos-feutres, par exemple.

Ces tableaux présentent plusieurs inconvénients, ils sont notamment coûteux et nécessitent un procédé de fabrication long et parfois complexe.

En conséquence, un objectif de l'invention est de réaliser de nouveaux tableaux magnétiques, obtenus par un procédé simple à mettre en oeuvre.

Un second objectif de l'invention est de réaliser un nouveau procédé de fabrication permettant d'obtenir en une seule étape, le cadre entourant le panneau métallique d'affichage des messages et les pattes de fixation dudit tableau sur le mur.

A cet effet, l'invention concerne donc un procédé caractérisé en ce que l'on surmoule par injection sur la périphérie d'un panneau métallique, fixé temporairement dans le moule, une bordure formant cadre, l'empreinte de moulage communiquant en outre avec des cavités situées sensiblement dans le même plan horizontal que ladite empreinte pour obtenir, en une seule opération, non seulement le cadre mais également des pattes de fixation pour l'accrochage éventuel du tableau.

Selon un mode de réalisation préférentiel, on creuse ponctuellement dans l'empreinte de moulage du cadre, des saignées, définissant, après injection, des nervures de renfort du cadre, tout en favorisant l'opération d'injection et, plus particulièrement, le remplissage de l'empreinte correspondant au cadre.

On fixe le panneau métallique dans l'empreinte du moule par des aimants permanents logés dans l'une des parties dudit moule.

Selon une autre caractéristique de l'invention, on favorise l'opération de démoulage du tableau à l'aide d'éjecteurs prenant appui dans le fond et sur le pourtour du cadre surmoulé.

L'invention s'étend également au tableau magnétique réalisé à l'aide du procédé selon l'invention.

D'autres caractéristiques et avantages ressortiront de la description ci-après donnée à titre d'exemple non limitatif et des dessins annexés dans lesquels :

    - la figure 1 est une vue partielle en coupe des deux parties du moule suivant la coupe AA de la figure 2. La figure 1a est un détail à grande échelle de la figure 1.

    - la figure 2 est une vue partielle de la partie supérieure du moule, vue de l'intérieur,

    - la figure 3 est une vue partielle du cadre après injection illustrant dans la partie déchirée la forme de la patte de fixation du tableau,

    - la figure 4 est une vue agrandie suivant la coupe B-B de la figure 2.

Le moule selon l'invention est constitué essentiellement de deux parties qui, pour la commodité de la description seront dénommées respectivement partie inférieure 1 et partie supérieure 2, et qui sont placées de chaque côté du panneau métallique 9 que l'on désire encadrer.

La partie inférieure 1 comporte une gorge périphérique 3, s'étendant le long du périmètre d'un rectangle, (si telle est la forme du tableau à obtenir), et présentant une section en U. Cette gorge présente un fond plat $3_1$ se raccordant par des congés $3_2$ à deux parois verticales $3_3$ et $3_4$ d'inégales hauteurs. La paroi $3_4$ est sensiblement plus haute et forme l'une des branches de la section en U du cadre après injection.

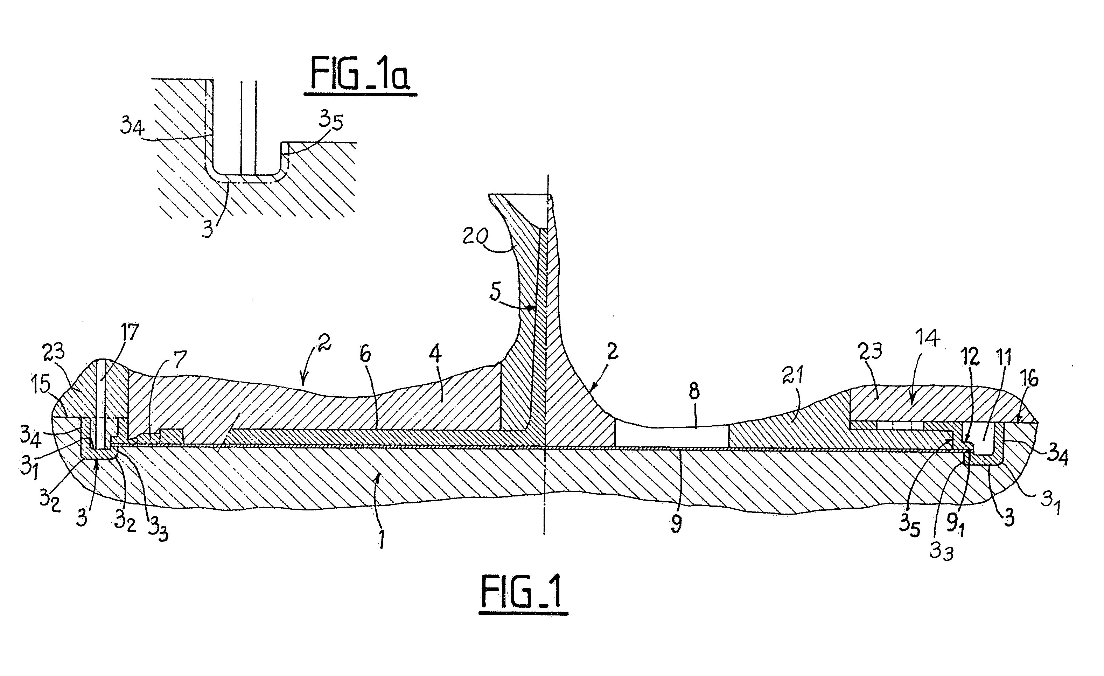

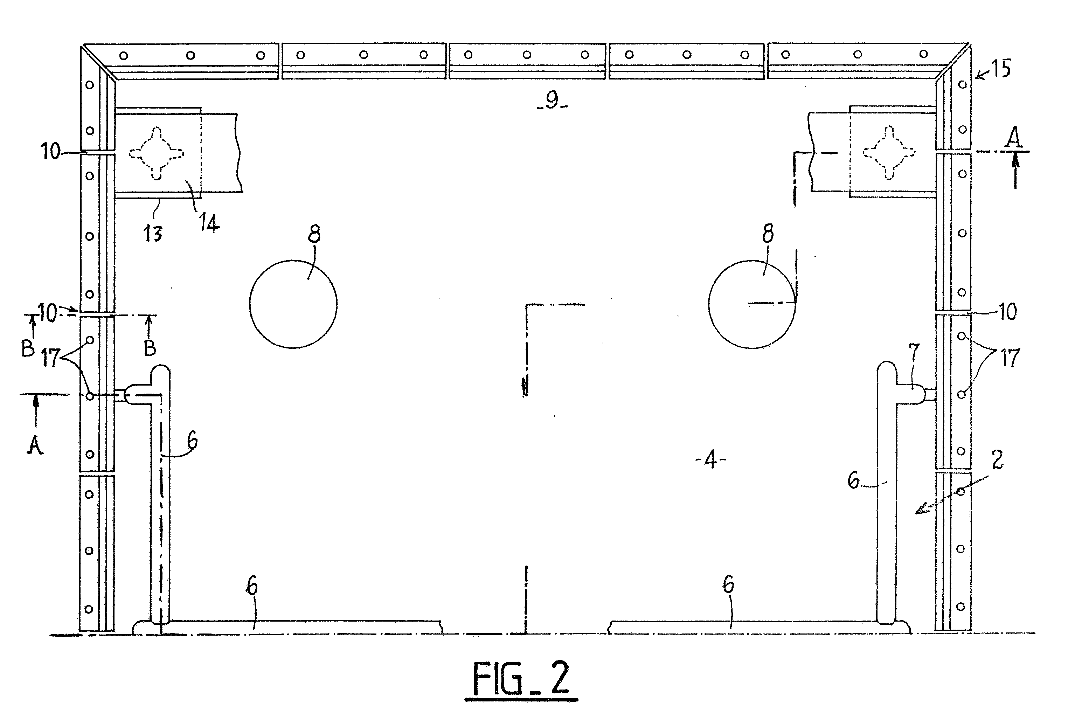

Comme illustré en figure 2, la partie supérieure 2 comprend une plaque porte-tôle mobile 4 comportant un conduit d'injection 5 vertical défini par une buse d'injection 20. Cette dernière pièce étant fragile, elle ne fait pas bloc avec la plaque porte-tôle 4 de façon à pouvoir être remplacée en cas de rupture. En outre, ce conduit d'injection 5 communique avec des canaux horizontaux 6 eux-mêmes en relation avec l'empreinte de moulage $3_5$ par des attaques de coulée 7. Enfin, on prévoit des coulisseaux 21 permettant de définir la face inférieure des pattes de fixation 14 décrites ultérieurement, ces coulisseaux pouvant se déplacer en retrait (vers la gauche de la figure 1) lors du démoulage. On prévoit en outre des noyaux 23 définissant l'évidement intérieur de la gorge en U du cadre. Cette même partie supérieure 4 comprend également au moins quatre pavés magnétiques 8 (figure 2), ou ventouses alimentées par une pompe à vide, qui serviront à la fixation temporaire du panneau métallique 9 placé dans le moule.

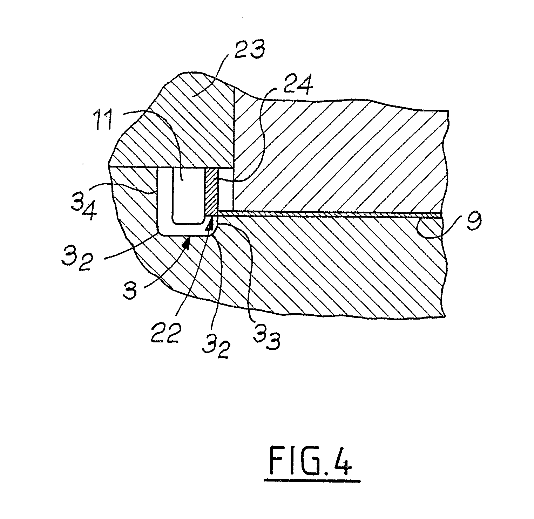

Enfin, l'empreinte de moulage comporte encore, comme visible en figure 2, des saignées 10, réalisées sur le noyau 23 qui assure la cavité du cadre injecté. Ces saignées sont destinées, d'une part, à définir après injection, des nervures de renfort 11 (figure 4) rigidifiant le cadre et s'étendant transversalement par rapport à son axe longitudinal, d'autre part, à favoriser l'opération d'injection et, en particulier, le passage de la matière injectée entre les deux parties du cadre. Lorsque l'on compare l'extrémité droite de la figure 1 et la figure 4, on constate dans le premier cas, qu'à cet endroit de la coupe il n'y a pas de nervures de renfort 11, que le cadre a la forme d'une gorge en U et que le rebord $9_1$ du panneau métallique 9 s'étend jusqu'à l'intérieur du U du cadre, en d'autres termes, la partie du cadre correspondant à la patte de fixation 14 est séparée du reste du bord du cadre $3_1$, $3_4$ par le panneau

métallique 9. Ainsi, les nervures de renfort 11 ont justement pour but de remédier à cet inconvénient en reliant les deux parties 14 et $3_1$, $3_4$.

Sur la figure 4, on observe justement cette nervure 11. En outre, le panneau métallique 9 a été découpé par presse verticale de façon à prévoir des échancrures 22 en regard des nervures de renfort 11, ainsi le bord du panneau métallique 9 ne s'étend pas jusqu'à l'intérieur du U du cadre. De plus, lors du moulage on dispose un plot métallique 24 dans chaque échancrure 22, ce plot est solidaire du noyau 23 et s'étend verticalement. Ainsi, au moment de l'injection, la matière plastique s'écoule de part et d'autre du plot métallique 24 de façon à constituer la totalité des rebords de la gorge en U du cadre et la nervure 11 (parties représentées sans hâchures sur la figure 4). Lors du démoulage, le plot métallique 24 est retiré avec le noyau 23, et lors du retrait de la matière plastique, celle-ci vient occuper l'emplacement laissé vide par le plot 24. Ainsi, on évite les déformations du cadre après le démoulage.

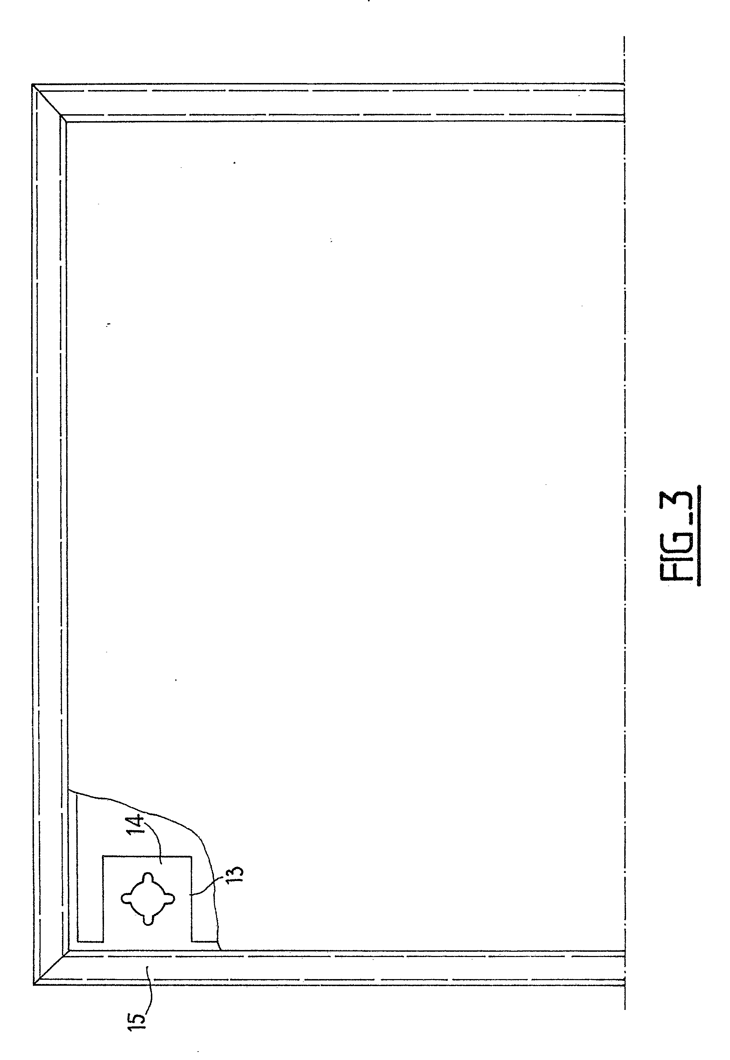

Le cadre 15 (figure 3) obtenu par surmoulage sur la panneau métallique 9 présente donc en section transversale comme visible en figure 1, sensiblement la forme d'un U dont la branche intérieure $3_3$ est prolongée vers l'intérieur du tableau par au moins une patte de fixation 14 venue d'une seule pièce avec le cadre et située sensiblement dans le même plan horizontal que le plan fictif 16 coïncidant avec le bord supérieur du cadre ou encore avec le plan de joint de la cavité de moulage. Ainsi, les pattes de fixation affleurent le cadre sans en déborder, ce qui favorise la fixation.

Le démoulage du tableau magnétique est favorisé par des éjecteurs 17 situés dans la partie supérieure du moule, tout le long de l'empreinte de moulage et en regard du cadre surmoulé. Ces éjecteurs doivent être suffisamment puissants pour séparer ou dissocier, des aimants permanents 8, le fond métallique 9 du tableau. Ainsi, l'opération de démoulage s'effectue en plusieurs temps. Dans un premier temps, on retire les coulisseaux 21 de sous la patte de fixation 14, puis l'on fait fonctionner les éjecteurs 17, simultanément avec l'ouverture des deux parties du moule et l'on sépare ainsi les aimants 8 du panneau métallique 9. On obtient alors le cadre illustré en figure 3.

L'invention s'étend, bien évidemment, aux tableaux magnétiques obtenus qui peuvent être avantageusement constitués d'un fond ou panneau en tôle 9, laqué ou non, sur le bord périphérique duquel est surmoulé un cadre 15 et des pattes de fixation en matière plastique injectable, par exemple, en polyéthylène ou en polystyrène additionné de résine destinée à assouplir le polystyrène afin d'éviter que la matière injectée exerce une contrainte sur la tôle 9 et la déforme.

Selon le revêtement de la tôle on pourra, au choix, l'utiliser comme support magnétique pour la fixation de documents à l'aide de pastilles aimantées ou encore comme une véritable ardoise à l'aide des feutres bien connus, à effaçage à sec.

Ainsi, on obtient, en une seule opération, qui réduit, par conséquent, très sensiblement le prix de revient, des panneaux d'affichage d'excellente présentation pouvant être au choix posés ou accrochés grâce aux pattes de fixation 14 venues de moulage avec le cadre 15. De préférence, on réalise un cadre muni de quatre pattes de fixation 14 disposées sensiblement aux quatre angles du cadre. Bien entendu, il est tout à fait envisageable d'utiliser pour le panneau d'affichage ou pour le cadre d'autres matériaux sans pour cela sortir de l'idée maîtresse de l'invention.

**Revendications**

1 - Procédé pour la réalisation de tableaux magnétiques, notamment d'affichage, de planning, de publicité ou autres, caractérisé en ce que l'on surmoule, par injection, sur la périphérie d'un panneau métallique (9) fixé temporairement dans le moule, une bordure formant cadre (15), l'empreinte de moulage communiquant en outre avec des cavités (13) situées sensiblement dans le même plan horizontal que ladite empreinte pour obtenir à la fois, en une seule opération, le cadre (15) et des pattes de fixation (14) pour l'accrochage du tableau.

2 - Procédé selon la revendication 1, caractérisé en ce que l'on creuse dans l'empreinte (3) de moulage du cadre (15), des saignées (10) définissant, après injection, des nervures (11) de renfort du cadre tout en favorisant le remplissage de ladite empreinte.

3 - Procédé selon l'une quelconque des revendications précédentes, caractérisé en ce que l'on découpe le bord ($9_1$) du panneau métallique (9) de façon à prévoir des échancrures (22) en regard des nervures de renfort (11), en ce que lors de l'injection on dispose dans ces échancrures des plots métalliques (24), en ce que lors du démoulage, on retire lesdits plots (24), et en ce que lors du retrait de la matière injectée, celle-ci vient occuper l'emplacement laissé vide par les plots.

4 - Procédé selon l'une des revendications 1, 2 ou 3, caractérisé en ce que l'on fixe le panneau métallique (9) par des aimants permanents (8) logés dans l'une des parties (2) du moule.

5 - Procédé pour la réalisation de tableaux magnétiques selon l'une des revendications 1, 2 ou 3, caractérisé en ce que l'on favorise l'opération de démoulage du tableau à l'aide d'éjecteurs (17) prenant appui dans le fond ($3_1$) et sur tout le pourtour du cadre surmoulé (15).

6 - Tableau magnétique obtenu selon le procédé conforme aux revendications 1 à 5, caractérisé en ce qu'il est constitué d'un panneau métallique (9) sur lequel est surmoulé un cadre (15) en matière plastique injectée ayant sensiblement en section la forme d'un U, l'une des branches ($3_3$) dudit cadre étant prolongée vers l'intérieur du panneau métallique par au moins une patte de fixation (14) venue d'une seule pièce avec le cadre et s'étendant horizontalement dans le même plan que celui-ci.

7 - Tableau magnétique selon la revendication 6, caractérisé en ce que le bord périphérique ($9_1$) du panneau métallique est noyé dans le cadre surmoulé (15).

8 - Tableau magnétique selon la revendication 7, caractérisé en ce que le panneau métallique (9) est constitué d'une tôle rectangulaire, les pattes de fixation (14) étant situées sensiblement aux quatre angles du cadre.

9 - Tableau magnétique selon les revendications 7 ou 8, caractérisé en ce que le cadre (15) est réalisé dans une matière injectable.

10 - Tableau magnétique selon la revendication 9, caractérisé en ce que le cadre (15) est constitué de polystyrène additionné de résine assouplissante évitant la déformation de la tôle.

11 - Tableau magnétique selon l'une quelconque des revendications 6 à 10, caractérisé en ce que le cadre en U (15) est ponctuellement renforcé par des nervures transversales (11) venues de moulage.

FIG_1

FIG_1a

FIG_2

EP 0 332 518 A2

EP 0 332 518 A2

15    14    13

FIG_3

FIG.4